# EUROPEAN PATENT APPLICATION

(11) **EP 4 609 986 A1**
(43) Date of publication of application: **03.09.2025**
(21) Application number: 23882266.2
(22) Date of filing: 08.09.2023
(51) Int. Cl.: B23Q 7/04, B23Q 7/00, B25J 13/00

(54) **WORKPIECE CARRY-IN/OUT DEVICE AND CONTROL METHOD FOR WORKPIECE CARRY-IN/OUT DEVICE**

(30) Priority: 25.10.2022 JP 2022170609
(71) Applicant: Citizen Watch Co., Ltd., Nishitokyo-shi, Tokyo 188-8511 (JP); Citizen Machinery Co., Ltd., Nagano 389-0206 (JP)
(72) Inventor: NAKAZAWA, Sakae, Kitasaku-gun, Nagano 389-0206 (JP); KAWAKUBO, Takashi, Kitasaku-gun, Nagano 389-0206 (JP); SARUTA, Yoshimi, Kitasaku-gun, Nagano 389-0206 (JP); NIKAIDOH, Tetsuya, Kitasaku-gun, Nagano 389-0206 (JP); UCHIYAMA, Yuhsuke, Kitasaku-gun, Nagano 389-0206 (JP); OKUDERA, Makoto, Kitasaku-gun, Nagano 389-0206 (JP)
(74) Representative: Louis Pöhlau Lohrentz
(86) International application number: PCT/JP2023/032828
(87) International publication number: WO 2024/090053

(57) **Abstract**

To narrow an operating area of the robot on a pallet side of the robot in a workpiece loading and unloading device, wherein the workpiece loading and unloading device (100) includes a placement portion (301) that includes two pallets (310) placed thereon, each of the two pallets configured to store a plurality of workpieces (10) arranged and thereon, a pallet movement portion (302) that is configured to move the pallet (310) placed in the placement portion, an arm (120) that is configured to move relative to an automatic lathe (200) that machines the workpiece (10), a hand (120) that is configured to transfer the workpiece (10) between the pallet (310) and the automatic lathe (200), and a controller (130), wherein the controller (130) controls the arm (110) to move within a combined range of a first range S1 and a second range S2, in the first range, the hand (120) reaches all of an area of the first pallet (310) and in the second range S2, the hand (120) reaches only some of an area of the second pallet (310), and controls the pallet movement portion (302), such that the first pallet (310) is unladed, and the second pallet (310) moves to the first position **P1** while the arm (120) separates from the second pallet (310).

## Description

### TECHNICAL FIELD

The present invention relates to a workpiece loading and unloading device and a control method for a workpiece loading and unloading device.

### BACKGROUND

A workpiece loading and unloading device is known that loads a workpiece from a pallet to a machine tool and unloads the workpiece from the machine tool to the pallet between the pallet that stores a number of workpieces side by side and the machine tool. The workpiece loading and unloading device may use a robot including at an end of an arm a hand. The hand of the robot grasps an unmachined workpiece housed in the pallet, and the arm of the robot rotates to deliver the grasped workpiece to the machine tool, and the hand of the robot receives and grasps the machined workpiece by the machine tool and returns the grasped workpiece to the original position (same position) of the pallet where the grasped workpiece was stored before machining (see, e.g., Patent Literature 1).

A device is also known in which a robot moves a workpiece between a pallet in which unmachined workpieces are placed side by side and a pallet in which machined workpieces are placed (see, e.g., Patent Literature 2).

### CITATION LIST

### Patent Literature

Patent Literature 1: JP3362656B
Patent Literature 2: JP2006-043866A

### SUMMARY

### Technical Problem

A robot may include a first hand that holds an unmachined workpiece from a pallet and delivers the workpiece to an automatic lathe, and a second hand that receives and holds the machined workpiece from the automatic lathe and returns the workpiece to the pallet.

Two pallets may be placed side by side on the pallet side. The configuration in which the two pallets are placed side by side has the following advantages. Namely, the configuration in which only one pallet is placed needs to replace the pallet with the pallet that stores the unmachined workpiece after the machined workpiece is stored in the pallet to return the machined workpiece to the original position.

In contrast, the configuration in which the two pallets are placed enables the replacement of the first pallet with the second pallet while the workpiece is transferred. Therefore, it is not necessary to stop the robot replacing the pallets, and the operation efficiency of the robot can be improved.

However, the robot needs to reach all the workpieces stored in the placed two pallets, and needs to have a wide reach range on the pallet side. In order to have a wide reach range of the robot on the pallet side, it is necessary to lengthen the arm, and in order to increase the rigidity of a portion that supports the longer arm, the weight of the robot increases, resulting in the increase in cost due to the increase in size of the robot.

The present invention has been made in view of the above circumstances, and an object of the present invention is to provide a workpiece loading and unloading device and a control method for a workpiece loading and unloading device that can prevent a cost of a robot from increasing by setting the narrow operation area of the robot on the pallet side.

### Solution to Problem

The first object of the present invention is to provide a workpiece loading and unloading device, including: a placement portion that includes two pallets placed thereon, each of the two pallets configured to store a plurality of workpieces arranged thereon; a pallet movement portion that is configured to move the pallet placed in the placement portion; an arm that is configured to move relative to an automatic lathe that machines the workpiece; a hand that is configured to hold the workpiece and transfer the workpiece between the pallet and the automatic lathe, and a controller that is configured to control the pallet movement portion, the arm, and the hand, wherein the placement portion includes the two pallets of a first pallet placed in a first position and a second pallet placed in a second position adjacent to the first position, the first pallet and the second pallet being arranged side by side in a plan view, the controller controls the arm to move within a combined range of a first range and a second range, in the first range, the hand reaches all of the workpieces arranged on the first pallet and in the second range, the hand reaches only some of the workpieces arranged on the second pallet, which are arranged closer to the first pallet than the workpieces arranged on the first pallet, and the controller controls the pallet movement portion, such that the second pallet moves toward the first position while the hand holds the workpieces arranged in a position of the second pallet close to the first pallet, and the arm separates from the pallet when all of the workpieces arranged and stored on the first pallet are stored.

The second object of the present invention is to provide a control method of controlling a workpiece loading and unloading device, wherein the workpiece loading and unloading device includes a placement portion that includes two pallets placed thereon, each of the two pallets configured to store a plurality of workpieces arranged thereon, a pallet movement portion that is configured to move the pallet placed in the placement portion, an arm that is configured to move relative to an automatic lathe that machines the workpiece, and a hand that is configured to hold the workpiece and transfer the workpiece between the pallet and the automatic lathe, the placement portion including the two pallets of a first pallet placed in a first position and a second pallet placed in a second position adjacent to the first position, the first pallet and the second pallet being arranged side by side in a plan view, wherein the method includes: controlling the arm to move within a combined range of a first range and a second range, in the first range, the hand reaches all of the workpieces arranged on the first pallet and in the second range, the hand reaches only some of the workpieces arranged on the second pallet, which are arranged closer to the first pallet than the workpieces arranged on the first pallet, and controlling the pallet movement portion, such that the second pallet moves toward the first position while the hand holds the workpieces arranged in a position of the second pallet close to the first pallet, and the arm separates from the pallet when all of the workpieces arranged and stored on the first pallet are stored.

### Advantageous Effects

According to the workpiece loading and unloading device and the control method for a workpiece loading and unloading device of the present invention, the increases in cost of the robot can be prevented.

### BRIEF DESCRIPTION OF THE DRAWINGS

[FIG. 1] FIG. 1 is a plan view of one embodiment of a workpiece loading and unloading device according to the present invention, viewed from above in a vertical direction.
[FIG. 2] FIG. 2 is a front view of FIG.1 viewed from a direction of an arrow A.
[FIG. 3] FIG. 3 is a side view of FIG. 2 viewed from a direction of an arrow B.
[FIG. 4A] FIG. 4A is a perspective view illustrating an external appearance of a stocker.
[FIG. 4B] FIG. 4B is a view illustrating the stocker viewed from a left side.
[FIG. 5] FIG. 5 is a plan view illustrating a positional relationship between a first position where a first pallet is placed, a second position where a second pallet is placed in a placement portion, and an axis C of an arm of a robot.
[FIG. 6] FIG. 6 is a plan view (1) equivalent to FIG. 5 that describes the operation of the workpiece loading and unloading device.
[FIG. 7] FIG. 7 is a plan view (2) equivalent to FIG. 5 that describes the operation of the workpiece loading and unloading device.
[FIG. 8] FIG. 8 is a plan view (3) equivalent to FIG. 5 that describes the operation of the workpiece loading and unloading device.
[FIG. 9] FIG. 9 is a plan view (4) equivalent to FIG. 5 that describes the operation of the workpiece loading and unloading device.
[FIG. 10] FIG. 10 is a plan view equivalent to FIG. 5 illustrating the stocker shifted when an area where the stocker is to be placed has an obstacle.

### DESCRIPTION OF EMBODIMENTS

An embodiment of a workpiece loading and unloading device and a control method for a workpiece loading and unloading device according to the present invention will be described below with reference to drawings.

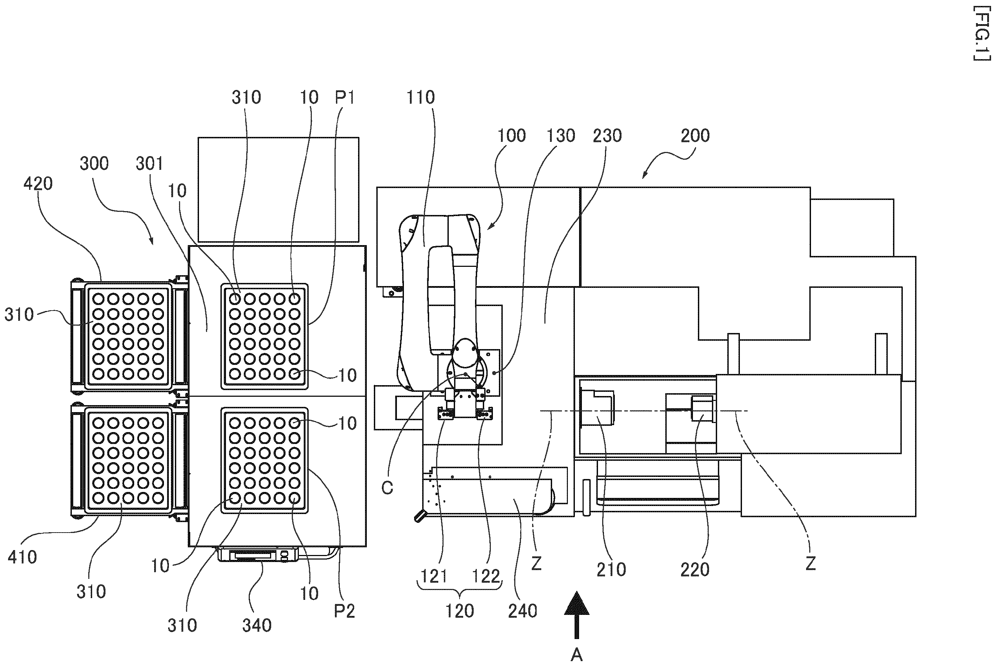

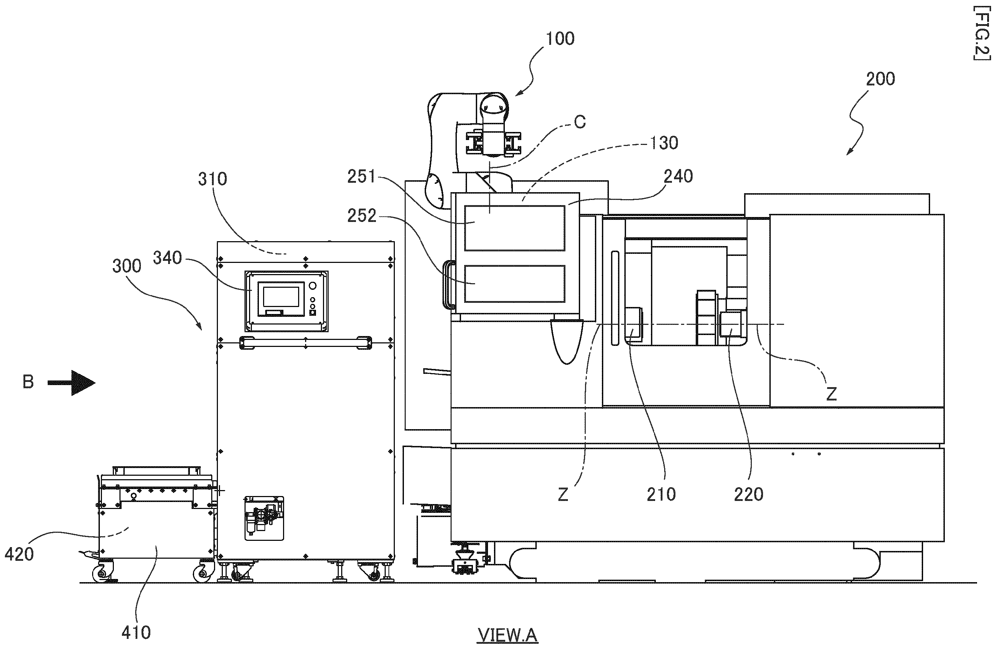

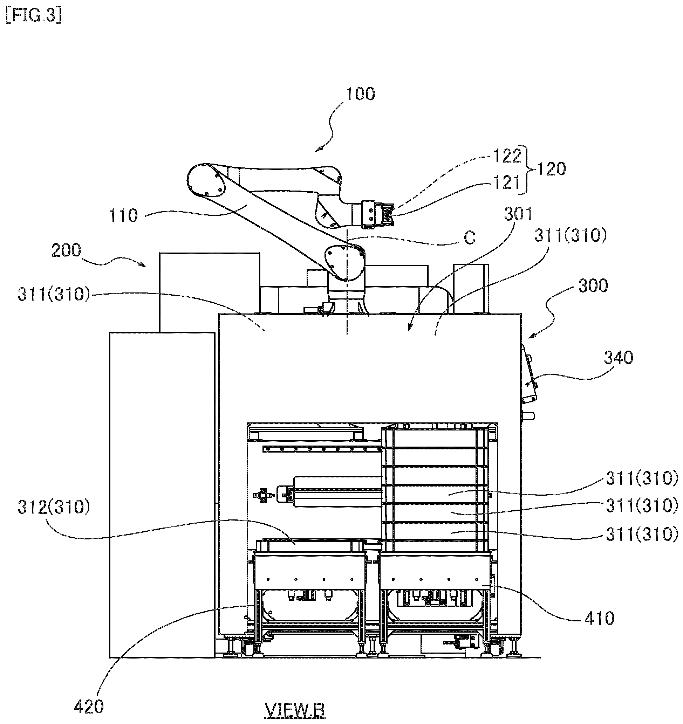

A configuration will be described. FIG. 1 is a plan view of one embodiment of the workpiece loading and unloading device according to the present invention, viewed from above in the vertical direction, FIG. 2 is a front view of FIG. 1 viewed from a direction of an arrow A, and FIG. 3 is a left side view of FIG. 2 viewed from a direction of an arrow B. A robot 100 and a stocker 300 are one embodiment of the workpiece loading and unloading device according to the present invention, and the operations of the robot 100 and the stocker 300 are one embodiment of the control method for the workpiece loading and unloading device according to the present invention.

An automatic lathe will be described. An automatic lathe 200 is an example of a machine tool in the workpiece loading and unloading device according to the present invention. The automatic lathe 200 is an NC lathe whose operation is controlled by a computer that reads a predetermined program and operates accordingly. As illustrated in FIGS. 1 to 3, the automatic lathe 200 of the embodiment includes, inside a main body case 230, a front main spindle 210 and a rear main spindle 220, and outside the main body case 230, an operation panel 240. The operation panel 240 includes a display screen 251, a keyboard 252, and a controller that controls each operation of not illustrated tools, etc.

The front main spindle 210 can rotate about a Z axis. The rear main spindle 220 can rotate about the Z axis and move linearly along the Z axis. The front main spindle 210 and the rear main spindle 220 are coaxially arranged.

The automatic lathe 200 transfers and machines the workpiece by controlling, for example, the chucking and the releasing of an after-described workpiece 10, the rotation of the front main spindle 210 about the Z axis while the front main spindle 210 chucks the workpiece 10, the movement of tools, the delivery of the workpiece 10 to the rear main spindle 220, the rotation of the rear main spindle 220 about the Z axis and the movement along the Z axis while the rear main spindle 220 chucks the workpiece 10, and the movement of the tools with a controller of the operation panel 240.

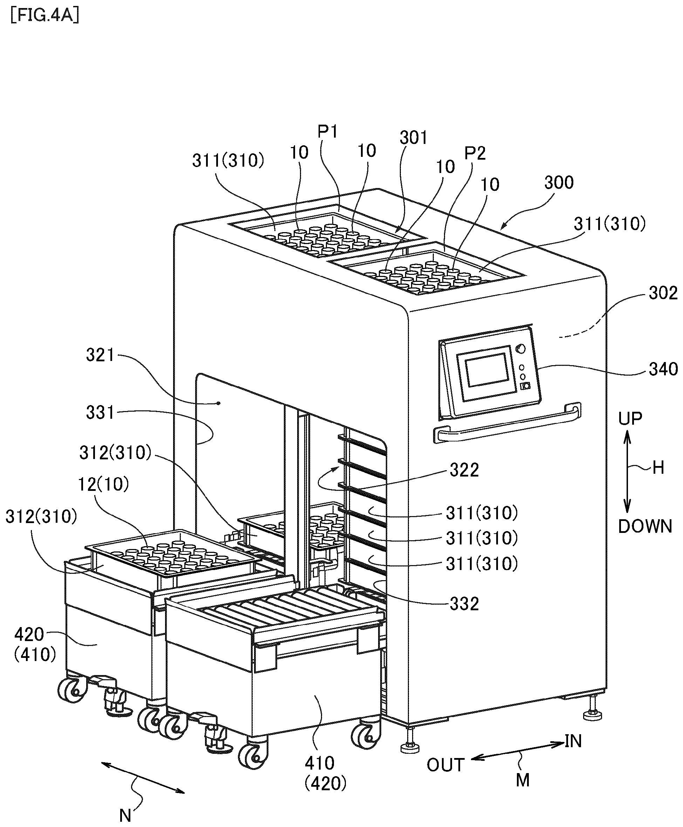

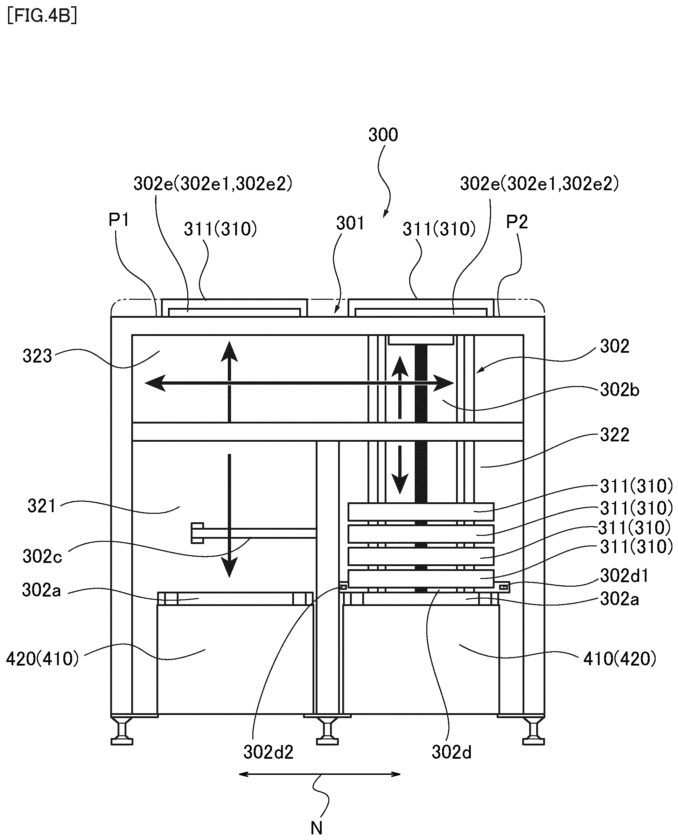

A stocker will be described. FIG. 4A is a perspective view illustrating an external appearance of the stocker 300, and FIG. 4B is a view of the stocker 300 viewed from the left side. As shown in FIGS. 1, 2, the stocker 300 is placed close to the automatic lathe 200 on the left side of the automatic lathe 200. The stocker 300 stores a plurality of pallets 311 in which a plurality of workpieces 11 which are not machined by the automatic lathe 200 are arranged, and a plurality of pallets 312 in which a plurality of workpieces 12 which are machined by the automatic lathe 200 are arranged.

In the following description, when the unmachined workpiece 11 and the machined workpiece 12 are not distinguished, they are simply referred to as the workpiece 10. In addition, there is no physical difference between the pallet 311 that stores the unmachined workpiece 11 and the pallet 312 that stores the machined workpiece 12 as a pallet, and the only difference is whether the stored workpiece 10 is the unmachined workpiece 11 or the machined workpiece 12. Therefore, when the pallet 311 and the pallet 312 are not distinguished, they are simply referred to as the pallet 310.

One pallet 310 stores 30 workpieces 10, for example. As illustrated in FIG. 1, the pallet 310 stores 30 workpieces 10 by arranging them one by one in predetermined positions, for example, five workpieces by six workpieces in a plane view.

As illustrated in FIGS. 4A, 4B, the stocker 300 includes on the top level thereof a placement portion 301. The placement portion 301 includes two pallets 310 placed side by side in a width direction N. The positions where the two pallets 310 are placed are referred to as a first position P1 and a second position P2, respectively, and the first position P1 and the second position P2 are adjacent to each other.

The stocker 300 includes below the first position P1 a housing space 321 that can house a plurality of pallets 312 stacked along the height direction H and a housing space 322 that can store a plurality of pallets 311 stacked along the height direction H. A plurality of pallets 312 store the machined workpiece 12 and a plurality of pallets 311 stores the unmachined workpiece 11.

The stocker 300 includes openings 331, 332 that allow a plurality of pallets 311 stacked below the first position P1 to be taken in and out with respect to the stocker 300 along the taking in and out direction M while being stacked.

As illustrated in FIG. 4B, the stocker 300 includes a pallet movement portion 302 and a stocker controller 340. The stocker controller 340 controls the operation of the pallet movement portion 302. As described below, the stocker controller 340 controls the pallet movement portion 302 in response to a command from the controller 130 of the robot 100. In addition, the stocker controller 340 can also control the pallet movement portion 302 independently of the controller 130 of the robot 100 without being controlled by the controller 130 by the stocker 300 itself.

The pallet movement portion 302 is provided with two placement tables 302a, a lifter 302b, a lateral guide rail 302c, a carrying holder 302d and a placement holder 302e. One of the placement tables 302a is provided in the housing space 321 below the first position P1, and the other of the placement tables 302a is provided in the housing space 322 below the second position P2.

The carrying holder 302d is connected to the after-described lifter 302b. The carrying holder 302d includes two clamping members 302d1, 302d2. The two clamping members 302d1, 302d2 are provided so that their positions in the height direction are always the same. The two clamping members 302d1, 302d2 are placed away from the pallet 310 on both outsides of the pallet 310 in the width direction N.

The carrying holder 302d operates to switch between a non-clamping state in which the clamping members 302d1, 302d2 are separated from the pallet 310 and a clamping state in which the clamping members 302d1, 302d move to the center of the width direction to clamp the pallet 310 from the outside in the width direction N for clamping.

The lifter 302b raises and lowers the carrying holder 302d along the height direction H. The lifter 302b is movable laterally along the lateral guide rail 302c.

The placement holders 302e are provided in the first position P1 and the second position P2 of the placement portion 301, respectively. Each placement holder 302e includes two clamping members 302e1, 302e2. The two clamping members 302e1, 302e2 are placed away from the pallet 310 on both outsides of the pallet 310 in the taking in-out direction M (see FIG. 4A).

The placement holder 302e operates to switch between a non-clamping state in which the clamping members 302e1, 302e2 are separated from the pallet 310 and a clamping state in which the clamping members 302e1, 302e2 move to the center of the taking in-out direction M to clamp the pallet 310 from the outside of the pallet 310 in the taking in-out direction M for clamping. The placement holder 302e provided in the first position P1 and the placement holder 302e provided in the second position P2 are switched between the above-described non-clamping state and clamping state independently of each other.

The pallet movement portion 302 moves the pallet 310 as follows with the above-described configuration. First, the carrying holder 302d moves by the lifter 302b to the height position of the topmost pallet 310 of the pallets 310 stacked on the placement table 302a in the housing space 322 below the second position P2. At that position, the clamping members 302d1, 302d2 clamp the topmost pallet 310 from the outsides in the width direction N and hold the topmost pallet 310.

Next, the lifter 302b lifts the carrying holder 302d upwards, so that the topmost pallet 310 rises to a horizontal movement space 323 provided directly below the placement portion 301. When the lifter 302b moves laterally along the lateral guide rail 302c, the pallet 310 that has raised to the position directly below the second position P2 in the horizontal movement space 323 moves from the position directly below the second position P2 to the position directly below the first position P1 through the horizontal movement space 323.

Next, the lifter 302b rises to the first position P1 of the placement portion 301 and places the pallet 310 clamped by the carrying holder 302d in the first position P1. At this point, the clamping members 302e1, 302e2 of the placement holder 302e provided in the first position P1 clamp the pallet 310 placed in the first position P1 from the outsides in the taking in-out direction M and hold the pallet 310 placed in the first position P1.

After the pallet 310 placed in the first position P1 is held by the placement holder 302e, the clamping members 302d1, 302d2 of the carrying holder 302d move to the non-camping state and move away from the pallet 310. Then, the lifter 302b lowers the carrying holder 302d to the horizontal movement space 323 directly below the first position P1, and after the lifter 302b moves laterally along the lateral guide rail 302c and moves to the position directly below the second position P2 in the horizontal movement space 323, the carrying holders 302d lowers to the housing space 322 below the second position P2, and moves to the height position of the topmost pallet 310 of the pallets 310 at that time stacked on the placement table 302a in the housing space 322 below the second position P2.

The clamping members 302d1, 302d2 of the carrying holder 302d clamp the topmost pallet 310 from the outsides in the width direction N to hold the topmost pallet 310, and the lifter 302b lifts the carrying holder 302d upwards, moves the pallet 310 to the second position P2 of the placement portion 301, and places the pallet 310 clamped by the carrying holder 302d in the second position P2. At this point, the clamping members 302e1, 302e2 of the placement holder 302e provided in the second position P2 clamp the pallet 310 placed in the second position P2 from the outsides in the taking in-out direction M and hold the pallet 310 placed in the second position P2.

After the pallet 310 placed in the second position P2 is held by the placement holder 302e, the clamping members 302d1, 302d2 of the carrying holder 302d move to the non-holding state and move away from the pallet 310. Then, the lifter 302b lowers the carrying holder 302d to the housing space 322 below the second position P2 and stops the carrying holder 302d. With the above operations, the pallet movement portion 302 sets the pallets 310 in which the unmachined workpieces 10 are arranged in the first position P1 and the second position P2, respectively.

Next, the operation of replacing the pallet 310 placed in the placement portion 301 by moving will be described. With the above-described operation of the carrying holder 302d and the lifter 302b, the carrying holder 302d moves to the first position P1, is placed in the first position P1, and clamps the first pallet 310 in which the machined workpieces 10 are arranged by the clamping members 302d1, 302d2 of the carrying holder 302d for the holding state. The clamping members 302e1, 302e2 of the placement holder 302e that has held the first pallet 310 are set to the non-holding state.

Next, the lifter 302b lowers the carrying holder 302d to the housing space 321 below the first position P1, and puts the first pallet 310 held by the carrying holder 302d onto the placement table 302a placed below the first position P1. Then, the carrying holder 302d is set to the non-holding state, and the carrying holder 302d separates from the first pallet 310.

Next, the lifter 302b raises the carrying holder 302d to the horizontal movement space 323 directly below the first position P1, and after the lifter 302b moves laterally along the lateral guide rail 302c and moves to a position directly below the second position P2 in the horizontal movement space 323, the lifter 302b rises the carrying holder 302d to the second position P2. Then, the clamping members 302d1, 302d2 of the carrying holder 302d clamp the second pallet 310 held by the placement holder 302e in the second position P2 for holding. After that, the placement holder 302e becomes the non-holding state and separates the second pallet 310.

Next, the lifter 302b lowers the carrying holder 302d to the horizontal movement space 323 directly below the second position P2, and after the lifter 302b moves laterally along the lateral guide rail 302c and moves to a position directly below the first position P1 in the horizontal movement space 323, the lifter 302b rises the carrying holder 302 to the first position P1. As a result, the second pallet 310 moves from the second position P2 to the first position P1. In the first position P1, the second pallet 310 is held by the placement holder 302e, and the carrying holder 302d separates from the second pallet 310 in the non-holding state.

Next, the lifter 302b lowers the carrying holder 302d to the horizontal movement space 323 directly below the first position P1, and after the lifter 302b moves laterally along the lateral guide rail 302c and moves to a position directly below the second position P2 in the horizontal movement space 323, the carrying holder 302d lowers to the housing space 322 below the second position P2 and holds the topmost pallet 310 of the pallets 310 at that time stacked on the placement table 302a in the housing space 322 below the second position P.

The lifter 302b lifts the carrying holder 302d upwards, moves the pallet 310 to the second position P2 of the placement portion 301, and places the pallet 310 clamped by the carrying holder 302d in the second position P2. The pallet 310 placed in the second position P2 is held by the placement holder 302e.

After that, the carrying holder 302d separates from the pallet 310 in the non-holding state, and the lifter 302b lowers the carrying holder 302d in the housing space 322 below the second position P2 to stop the carrying holder 302d. With the above operations, the pallet 310 placed in the placement portion 301 can be replaced.

The first position P1 and the second position P2 of the placement portion 301 are the positions where the workpieces 10 are transferred to and from the automatic lathe 200 by the after-described robot 100. Specifically, the robot 100 holds the unmachined workpiece 11 housed in the pallet 311 placed in the first position P1, and delivers the unmachined workpiece 11 to the automatic lathe 200. The robot 100 then receives the machined workpiece 12 from the automatic lathe 200, holds the machined workpiece 12, and returns the machined workpiece to a predetermined position of the pallet 311 where the machined workpiece was placed before machining.

The placement portion 301 is set on the opposite side of the axis C, which is the rotation center of the arm 110 of the robot 100, from the position where the workpiece 10 is transferred to and from the automatic lathe 200. In addition, the direction in which the first position P1 and the second position P2 arranged side by side in the placement portion 301 is a direction that intersects the direction connecting the axis C and the position where the workpiece 10 is transferred in the automatic lathe 200.

When all the workpieces 11 stored in the pallet 311 in the first position P1 are machined to be the machined workpieces 12 (pallet 311 becomes pallet 312), the stocker 300 sequentially lowers the pallet 312 to the housing space 321 below the first position P1 by the above-described operation of the pallet movement portion 302. The housing space 321 below the first position P1 of the stocker 300 stores the pallets 312 in which the machined workpieces 12 are arranged in a stacked state along the height direction H.

In addition, the pallet movement portion 302 of the stocker 300 moves the pallet 311 in the second position P2 to the empty first position P1 by the above-described operation. The housing space 322 below the second position P2 of the stocker 300 stores the pallets 311 in which the unmachined workpieces 11 are stored in a stacked state along the height direction H. The pallet movement portion 302 of the stocker 300 raises the topmost pallet 311 of the pallets 311 stacked in the housing space 322 below the second position P2 to the second position P2. As a result, the two pallets 311 are arranged side by side in the first position P1 and the second position P2 of the placement portion 301 in a plan view.

A robot will be described. The robot 100 has an arm 110, a hand 120, and a controller 130. The arm 110 is fixed to the main body case 230 of the automatic lathe 200 to rotate about the axis C extending in a vertical direction. The position of the axis C around which the arm 110 is fixed to the main body case 230 is a position that is approximately midway between the position for transferring the workpiece 10 to and from the automatic lathe 200 and the position for transferring the workpiece 10 to and from the pallet 310 in the placement portion 301 in a plan view. The arm 110 has a plurality joints, and can move three dimensionally by rotating about each joint.

The hand 120 is fixed to one end of the arm 110 opposite the other end fixed to the automatic lathe 200. The hand 120 includes two holding portions of a first hand 121 and a second hand 122. The first hand 121 and the second hand 122 can hold the workpiece 10 by closing and release the workpiece 10 by opening.

The robot 100 carries the workpiece 10 held by the hand 120 between the placement portion 301 where the pallet 310 is placed and the automatic lathe 200 by rotating the above-described each joint of the arm 110. The robot 100 transfers the workpiece 10 between the pallet 310 and the automatic lathe 200 by the hand 120.

More particularly, the first hand 121 of the hand 120 holds one of the unmachined workpieces 11 arranged in each housing position of the pallet 310 and delivers the unmachined workpiece 11 to the front main spindle 210 of the automatic lathe 200. Meanwhile, the second hand 122 of the hand 120 receives the machined workpiece 12 from the rear main spindle 220 of the automatic lathe 200, holds the machined workpiece 12, and returns the machined workpiece 12 to the pallet 310.

The controller 130 controls the rotation of each joint of the arm 110 and the opening and the closing of the hand 120. The controller 130 may be configured as a part of the controller in the operation panel 240 of the automatic lathe 200. The controller 130 also issues an instruction to the stocker controller 340 of the stocker 300, and the stocker controller 340 controls the operation of the pallet movement portion 302.

Here, the positional relationship between the first position P1 where the first pallet 310 is placed and the second position P2 where the second pallet 310 is placed in the placement portion 301 and the axis C of the arm 110 of the robot 100 will be described.

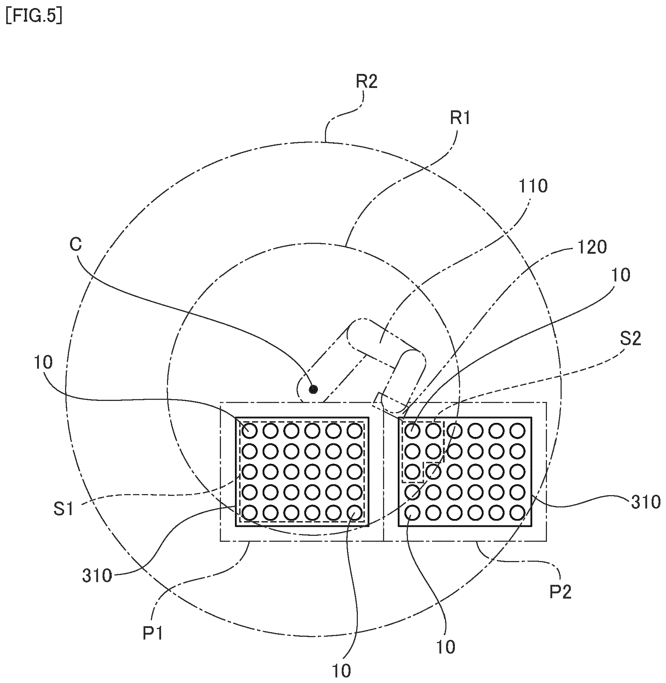

FIG. 5 is a plan view illustrating the positional relationship of the first position P1 where the first pallet 310 is arranged and the second position P2 where the second pallet 310 is arranged in the placement portion 301 and the axis C of the arm 110 of the robot 100.

As illustrated in FIG. 5, the arm 110 of the robot 100 is set under the control of the controller 130 to move in a range of a first range S1 in which the hand 120 reaches all of the workpieces 10 arranged on the first pallet 310 placed in the first position P1 and a second range S2 in which the hand 120 reaches only some of the workpieces 10 arranged on the second pallet 310 placed in the second position P2, which are arranged in a position closer to the first pallet 310 (more particularly, for example, portion from upper left to third from bottom and portion from top next to upper left to second from top).

In the placement portion 301 of the stocker 300, the first pallet 310 is placed in the first position P1 and the second pallet 310 is placed in the second position P2. The robot 100 transfers the workpiece 10 between the two pallets 310 placed in the placement portion 301 and the automatic lathe 200; however, the order of transferring the workpiece 10 is the workpieces 10 stored on the first pallet 310 are transferred first, and then, after the first pallet 310 that stores the unmachined workpiece 11 empties, the workpieces 10 stored on the second pallet 310 are transferred.

In addition, the robot 100 transfers the workpieces from the workpiece 10 placed on the upper left of each pallet 310 in FIG. 5, and then transfers the next workpiece 10 by shifting the position down by one from the upper left. After the robot 100 transfers the bottommost workpiece 10, the robot 100 moves to the right next to the upper left, and transfers the workpiece 10 of the right next to the upper left. Thereafter, the robot 100 similarly moves down by one, and after the robot 100 transfers the bottommost workpiece 10, the robot 100 returns to the top, and moves to the right next to transfer the workpiece 10.

In addition, the upper left position of the first palette 310 is the position farthest from the second palette 310, and the lower right position of the first palette 310 is the position closest to the second palette 310. Similarly, the upper left position of the second palette 310 is the position closest to the first palette 310. In other words, the robot 100 transfers the workpieces 10 from the workpiece 10 farthest from the second pallet 310, and after the robot 100 finishes transferring the workpiece 10 of the first pallet 310 closest to the second pallet 310, the robot 100 transfers the workpiece 10 from the workpiece 10 of the second pallet 310 closest to the first pallet 310.

The pallet movement portion 302 of the stocker 300 is controlled by the controller 130 of the robot 100 to take the first pallet 310 out from the first position P1 to the lower housing space 321 and move the second pallet 310 to the first position P1, as described above, while the hand 120 holds the unmachined workpiece 11 of the second pallet 310 arranged in the position close to the first pallet 310, separates from the pallet 310, and the arm 110 moves to the automatic lathe 200 when all the workpieces 10 arranged and stored on the first pallet 310 are the machined workpieces 12. Furthermore, the pallet movement portion 302 moves the pallet 310 stored in the lower housing space 322 to the empty second position P2 under the control of the controller 130, as described above.

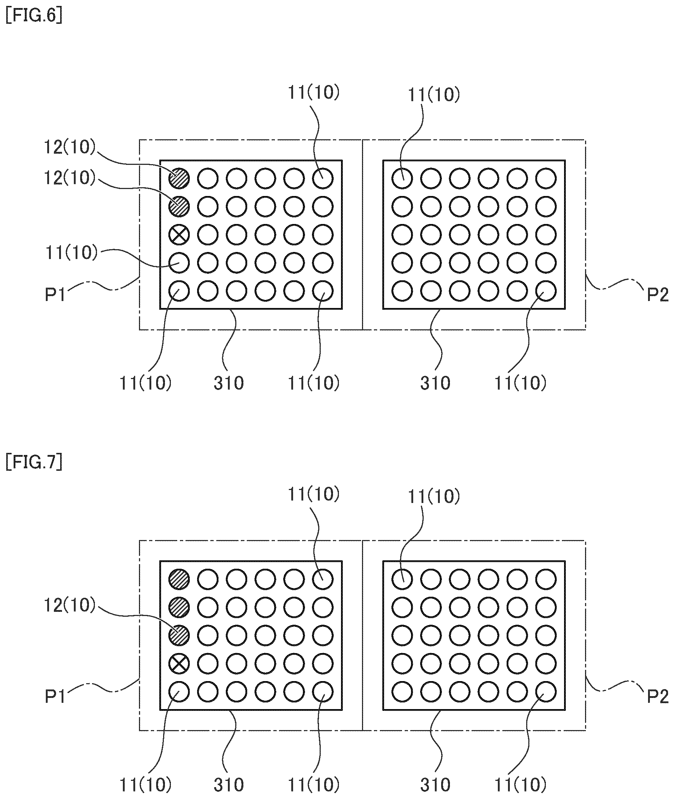

An operation will be described. FIGS. 6-10 are plan views equivalent to FIG. 5 describing the operation of the workpiece loading and unloading device of this embodiment. The workpiece loading and unloading device of this embodiment operates as described below with reference to FIGS. 6-10.

As illustrated in FIG. 6, the unmachined workpieces 11 are arranged and stored on the first pallet 310 and the second pallet 310. In addition, the machined workpiece 12 is placed in the two portions of the first pallet 310 which are the upper left farthest from the second pallet 310 and below the upper left, and the portion following the two portions marked with X (portion directly below machined workpiece 12 in FIG. 6) is empty with no workpiece 10 placed. In FIGS. 6-9, the machined workpiece 12 is shaded inside the circle, and the unmachined workpiece 11 is not shaded inside the circle.

The machined workpiece 12 is placed on the first pallet 310 because the first pallet 310 was placed in the second position P2 before moving to the first position P1, and when the first pallet 310 is placed in that second position P2, the unmachined workpiece 11 is machined by the automatic lathe 200, and stored as the machined workpiece 12. Similarly, the portion marked with X is empty because when the first pallet 310 was placed in the second position P2, the unmachined workpiece 11 was placed, and delivered to the robot 100.

In other words, the first pallet 310 placed in the first position P1 in FIG. 6 was the second pallet 310 placed in the second position P2 before the first pallet 310 illustrated in FIG. 6. The second pallet 310 placed in the second position P2 was moved to the first position P1 to be the first pallet 310 as illustrated in FIG. 6 when the machined workpiece 12 is returned to the two portions which is the upper left and below the upper left, and the unmachined workpiece 11 is held and delivered by the robot 100 from the portion marked with X following the two portions.

In addition, FIG. 6 illustrates that the next pallet 310 stored in the housing space 322 below the second position P2 is placed in the second position P2 after the second pallet 310 previously placed in the second position P2 is moved to the first position P1.

FIG. 6 illustrates that the robot 100 moves the arm 110 under the control of the controller 130, and the first hand 121 of the hand 120 holds the unmachined workpiece 11 placed next to the empty portion marked with X on the first pallet 310 (in FIG. 6, portion directly below portion marked with X). When the first hand 121 holds the unmachined workpiece 11, the arm 110 rotates under the control of the controller 130, so that the robot 100 moves the hand 120 to the automatic lathe 200.

When the automatic lathe 200 can complete the machining with only the front main spindle 210 as an example, the front main spindle 210 holds the machined workpiece 12. The second hand 122 of the hand 120 which has reached the automatic lathe 200 by the rotation of the arm 110 receives the machined workpiece 12 held by the front main spindle 210 under the control of the controller 130 (front main spindle 21 holds no workpiece 10). Next, under the control of the controller 130, the unmachined workpiece 11 held by the first hand 121 is delivered to the front main spindle 210.

Then, when the arm 110 rotates and the hand 120 separates from the machining chamber of the automatic lathe 200 under the control of the controller 130, the automatic lathe 200 starts machining the unmachined workpiece 11 received by the front main spindle 210.

When the hand 120 reaches the first pallet 310 in the first position P1 by the rotation of the arm 110, the second hand 122 returns the machined workpiece 12 held by the second hand 122 to the portion marked with X (portion where machined workpiece 12 was placed before machining) in FIG. 6 under the control of the controller 130. Next, under the control of the controller 130, the hand 120 rotates, and the first hand 121 holds the unmachined workpiece 11 placed next to the empty portion marked with X (in FIG. 6, portion directly below portion marked with X). As a result, the workpieces 10 on the first pallet 310 placed in the placement portion 301 are stored as illustrated in FIG. 7.

In other words, the machined workpiece is placed in the three portions of the first pallet 310 farthest from the second pallet 310, and the portion marked with X following those three portions (portion directly below machined workpiece 12 in FIG. 7) is empty with no workpiece 10 placed.

As described above, the hand 120 of the arm 110 of the robot 100 reaches the first range S1 which covers the workpiece 10 arranged on the first pallet 310 placed in the first position P1 under the control of the controller 130.

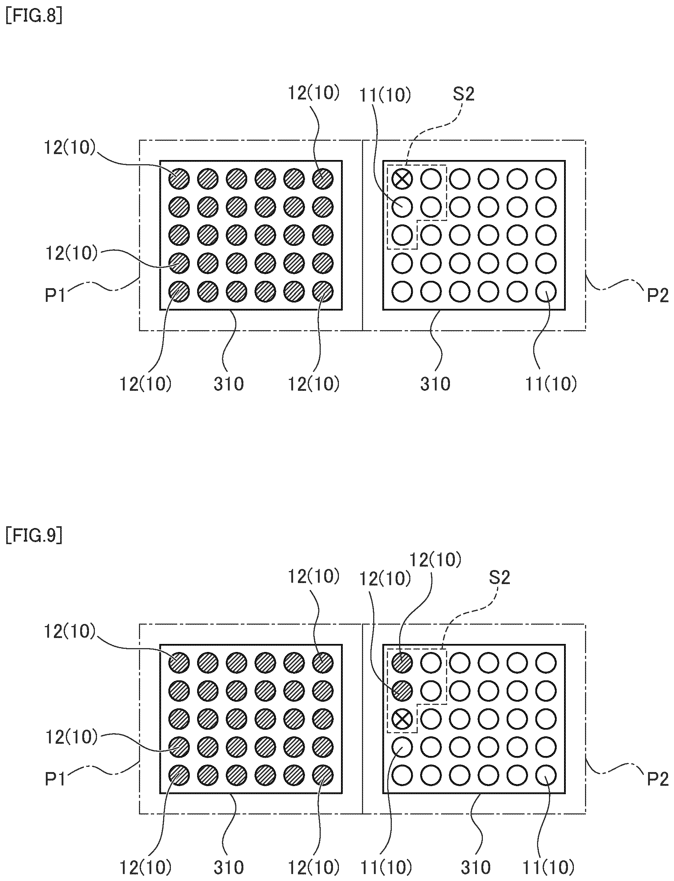

With the repetition of the loading and unloading operations by the robot 100 including the holding of the unmachined workpiece 11 on the first pallet 310, the loading to the automatic lathe 200, the unloading of the machined workpiece 12 with the automatic lathe 200, and the storing of the machined workpiece 12 on the first pallet 310, the first pallet 310 is filled with the machined workpieces 12 become the workpieces 12 from the first portion to the lower right portion, as illustrated in FIG. 8.

As described above, the hand 120 of the arm 110 of the robot 100 reaches the second range S2 which covers the workpiece 10 arranged in the position of the second pallet 310 placed in the second position P2 closer to the first pallet 310 (more particularly, for example, portion from upper left to third from bottom and portion from top next to upper left to second from top) under the control of the controller 130.

Therefore, after the first pallet 310 is filled with the machined workpieces 12, the arm 110 of the robot 100 moves the hand 120 to the second pallet 310 under the control of the controller 130, and the first hand 121 holds the unmachined workpiece 11 of the second pallet 310 placed in the upper left of the second pallet 310, and loads the workpiece 12 to the automatic lathe 200 by the rotation of the arm 110. As a result, the upper left portion of the second pallet 310 marked with X empties as illustrated in FIG. 8.

Then, with the repetition of the loading and the unloading operations by the robot 100 including the holding of the unmachined workpiece 11 on the second pallet 310, the loading to the automatic lathe 200, the unloading of the machined workpiece 12 with the automatic lathe 200, and the storing of the machined workpiece 12 on the second pallet 310, the second pallet 310 is filled with the machined workpieces 12 from the portion on the upper left to the portion second from the top, and the third unmachined workpiece 11 from the upper left is unloaded to the automatic lathe 200 by the robot 100, as illustrated in FIG. 9. While the robot 100 separates from the placement portion 301, the pallet movement portion 302 of the stocker 300 moves the pallet 310 as follows under the control of the controller 130.

In other words, the pallet movement portion 302 lowers the first pallet 310 in the first position P1 filled with the machined workpieces 12 to the housing space 321 below the first position P1. The pallet movement portion 302 moves to the empty first position P1 the second pallet 310 in the second position P2 filled with the machined workpieces 12 from the portion on the upper left to the portion second from top and the empty third portion from the upper left. The second pallet 310 moved to the first position P1 is the first pallet 310 (name of pallet 310 is changed for description purpose).

Furthermore, the pallet movement portion 302 raises the pallet 310 placed on the topmost of the pallets 310 that are stacked and stored in the housing space 322 below the second position P2, and moves the pallet 310 to the empty second position P. The name of the pallet 310 moved to the second position P2 is the second pallet 310.

When each pallet 310 moves, each pallet 3101s as illustrated in FIG. 6. The robot 100 continues the transferring of the workpiece 10 between the pallet 310 and the automatic lathe 200 as described above, and the robot 100 loads and unloads the workpiece by repeating the states illustrated in FIGS. 6-9.

In the above-described one example of the operation, as illustrated in FIG. 9, when the third workpiece 11 in the second range S2 of the second pallet 310 is unloaded from the second pallet 310, the pallet movement portion 302 moves the second pallet 310 to the first position P1. However, the pallet movement portion 302 may move the first pallet 310 downward, and move the second pallet 310 to the first position P1 when the first workpiece 11 in the second range S2 of the second pallet 310 is unloaded from the second pallet 310, or when the second workpiece 11 in the second range S2 of the second pallet 310 is unloaded from the second pallet 310, as illustrated in FIG. 8.

Namely, when all of the workpieces 10 stored on the first pallet 310 placed in the first position P1 are the machined workpieces 11, and the unmachined workpieces 11 stored in the second range S2 on the second pallet 310 placed in the second position P2 are unloaded, the pallet movement portion 302 can move the second pallet 320 to the first range S1 regardless of the number of machined workpieces 12 stored in the second range S2.

As a result of the above-described transfer of the workpiece 10 and the movement of the pallets 310, when the housing space 322 below the first position P1 is filled with the stacked pallets 312 which store the machined workpieces 12, the pallets 312 stacked in the housing space 322 below the first position P1 are manually moved by an operator to a cart 420 for unloading placed on the side of the stocker 300 through the opening 331 to empty the housing space 321 below the first position P1. Then, after the cart 420 on which the pallet 312 which stores the machined workpiece 12 is moved to another position, and the pallet 312 which stores the workpiece 12 is unloaded, the pallet 312 which stores the unmachined workpiece 12 is placed on the cart 420.

When the housing space 3222 below the second position P2 has no pallet 311 which stores the unmachined workpiece 11, the operator manually moves the pallet 311 which stores the stacked unmachined workpiece 12 and is loaded onto the cart 410 for loading placed on the side of the stocker 300 to the housing space 322 below the second position P2 to be stored through the opening 332. The cart 410 in which the pallet 311 that stores the unmachined workpiece 11 is placed is then moved to the side of the opening 331 on the unloading side to the cart 420 for unloading. There is no difference between the cart 410 for loading and the cart 420 for unloading, and the two carts are only distinguished for the purpose of description depending on whether one type of cart is used for loading or for unloading.

As described in detail above, according to the workpiece loading and unloading device (robot 100 and stocker 300) and the control method of this embodiment, the two pallets of the first pallet 310 and the second pallet 310 are arranged side by side in the placement portion 301 on the pallet side that transfers the workpiece 10 to and from the automatic lathe 200. When the loading and unloading operation that holds the unmachined workpiece 11 placed in a predetermined position on the pallet 310 and returns the machined workpiece 12 to the original position of the pallet 310 placed before machining, compared to a configuration in which only one pallet 310 is placed in the placement portion 301, the waiting time of the robot 100 when replacing the pallet 310 can be eliminated.

In addition, as illustrated in FIG. 5, according to the workpiece loading/unloading device and the control method of this embodiment, the arm 110 of the robot 100 moves in the combined range of the first range S1 in which the arm 110 of the robot 100 can reach all of the workpieces 10 arranged on the first pallet 310 placed in the first position P1 and the second range S2 in which the arm 110 of the robot 100 can reach only some of the workpieces 10 arranged on the second pallet 310 placed in the second position P close to the first pallet 310 (more particularly, for example, portion from upper left to third from bottom and portion from top next to upper left to second from top) under the control of the controller 130.

Accordingly, the robot 100 only needs to move within the range of the circle R1 illustrated by the dotted line in FIG. 5 on the pallet side where the robot 100 transfers the workpiece 10 to and from the automatic lathe 200. In other words, the robot 100 can have a smaller operation range than the circle R2 illustrated by the dotted line in FIG. 5 where the hand 120 can reach all of the workpieces 10 arranged on the first pallet 310 and all of the workpieces 10 arranged on the second pallet 310 which are arranged side by side in the placement portion 301.

As a result, the workpiece loading and unloading device and the control method of this embodiment can reduce the operation area on the pallet side of the robot 100 to reduce the movement of the arm 110. Therefore, the workpiece loading and unloading device and the control method of this embodiment can reduce the weight of the robot 100 (prevent robot 100 from increasing in size due to increase in weight) and reduce the cost of the robot 100 (prevent increase in cost) because the length of the arm 110 can be shortened (there is no need to make it longer) and there is no need to increase the rigidity of the portion supporting the arm 110.

When the time required for machining the workpiece 11 by the automatic lathe 200 is shorter than the operation time of the robot 100, the operation time of the robot 100 has a significant impact on the cycle time. However, the workpiece loading and unloading device and the control method of the present embodiment can also shorten the cycle time of the operation of the robot 100 by the rotation of the arm 110 by reducing the movement of the arm 110 when the time required for machining the workpiece 11 by the automatic lathe 200 is short

In addition, according to the workpiece loading and unloading device and the control method, the arm 110 has a length that reaches the combined range of the first range S1 and the second range S2 from the axis C of the rotation center under the condition that the position for transferring the workpiece 10 on the automatic lathe 200 is set within the circle R1 of the operation range of the robot 100, so that the arm 110 can be shortened.

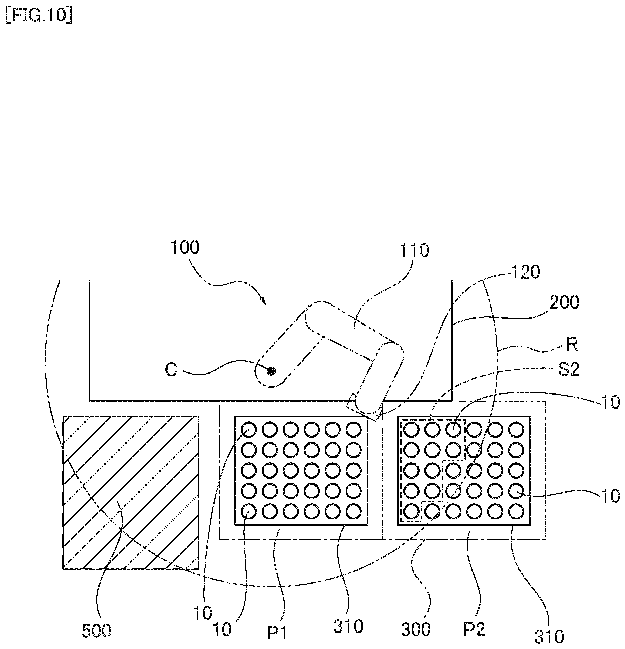

FIG. 10 is a plan view equivalent to FIG. 5, illustrating the stocker 300 is shifted when the range where the stocker 300 is to be placed includes the obstacle 500.

According to the workpiece loading and unloading device and the control method of this embodiment, the hand 120 of the robot 100 is required to reach to the first range S1 which is the entire area of the first pallet 310 and the second range S2 which is a part of the second pallet 310 of the two pallets 310 placed in the placement portion 301.

Therefore, even when the range where the stocker 300 is to be placed includes the obstacle 500 such as a structure of a factory (e.g., pillar) or other devices, as illustrated in FIG.10, according to the workpiece loading and unloading device and the control method of this embodiment, the stocker 300 can be shifted to a position that avoids the obstacle 500, such that the hand 120 of the robot 100 can reach the combined range of the first range S1 which is the entire area of the first pallet 310 and the second range S2 which is a part of the second pallet 310 the stocker 300. Therefore, the workpiece loading and unloading device and the control method of this embodiment can improve the freedom degree of the placement of the automatic lathe 200, the robot 100, and the stocker 300.

In addition, according to the workpiece loading and unloading device and the control method of this embodiment, the direction in which the first position P1 and the second position P2 are aligned in the placement portion 301 intersects the direction connecting the axis C and the position for transferring the workpiece 10 in the automatic lathe 200. As a result, the difference in distance between the workpiece 10 that is farthest from the position and the workpiece 10 that is closest to the position for transferring the workpiece 10 to and from the automatic lathe 200 within the combined range of the first range S1 and the second range S2 can be reduced compared to when the direction in which the first position P1 and the second position P2 are aligned in the placement portion 301 is set along (approximately parallel to) the direction connecting the axis C and the position for transferring the workpiece 10 to and from the automatic lathe 200.

This makes it possible to suppress the variation in movement distance of the arm 110, and to suppress the variation in operation time of the robot 100 when the time required for machining the workpiece 11 by the automatic lathe 200 is shorter than the operation time of the robot 100.

In addition to the placement portion 301, the workpiece loading and unloading device and the control method of this embodiment also includes the housing space 321 that stores the pallet 312 on which the machined workpiece 12 is stored and the housing space 322 that stores the pallet 311 on which the unmachined workpiece 11 is stored. However, the workpiece loading and unloading device and the control method of the present invention are not limited to such a configuration as long as they include the placement portion 301 and the pallet movement portion 302 in the stocker 300, and do not need to include the above-described housing spaces 321, 322.

Although the workpiece loading and unloading device and the control method of this embodiment apply the robot 100 including the arm 110 with a multi-joint, the workpiece loading and unloading device and the control method according to the present invention can also apply by replacing the robot 100 with a transport mechanism that moves the hand 120 with a link mechanism in the same way as the arm 110 of the robot 100 with the multi-joint.

According to the workpiece loading and unloading device and the control method of this embodiment, the pallet movement portion 302 moves the second pallet 310 to the first position P1 under the control of the controller 130 while the robot 100 holds the workpiece 10 in the second range S2, separates from the pallet 310, and moves from the side of the pallet 310 towards the side of the automatic lathe 200. However, the second pallet 310 does not need to reach the first position P1 by the time the robot 100 returns to the side of the pallet 310, and it is sufficient if the second pallet 310 at least moves a little towards the first position P1. However, the movement amount should be the movement amount by which the unmachined workpiece 11 held by the hand 120 is positioned within the combined range of the first range S1 and the second range S2.

The above-described embodiment describes that the automatic lathe 200 completes the machining while holding the workpiece 10 with the front main spindle 210. However, according to the workpiece loading and unloading device and the control method of the present invention, the machine tool (automatic lathe 200) and the workpiece loading and unloading device (robot 100, stocker 300) may be configured such that the hand 121 may receive the machined workpiece 120 from the rear main spindle 220 and delivers the unmachined workpiece 11 to the front main spindle 210 when the machined workpiece 10 while being held by the front main spindle 210 is delivered to the rear main spindle 220, and the machining is completed while being held by the rear main spindle 220.

According to the workpiece loading and unloading device and the control method of this embodiment, the automatic lathe 200 is applied as an example of the machine tool. However, the workpiece loading and unloading device and the control method according to the present embodiment is not limited thereto, and a machine tool that performs various plastic processing on a workpiece can be applied.

### CROSS-REFERENCE TO RELATED APPLICATIONS

This application claims priority based on Japanese Patent Application No. 2022-170609 filed with the Japan Patent Office on October 25, 2022, the entire disclosure of which is entirely incorporated herein by reference.

## Claims

1. A workpiece loading and unloading device, comprising:
a placement portion that comprises two pallets placed thereon, each of the two pallets configured to store a plurality of workpieces arranged thereon;
a pallet movement portion that is configured to move the pallet placed in the placement portion;
an arm that is configured to move relative to an automatic lathe that machines the workpiece;
a hand that is configured to hold the workpiece and transfer the workpiece between the pallet and the automatic lathe; and
a controller that is configured to control the pallet movement portion, the arm, and the hand, wherein
the placement portion comprises the two pallets of a first pallet placed in a first position and a second pallet placed in a second position adjacent to the first position, the first pallet and the second pallet being arranged side by side in a plan view,
the controller controls the arm to move within a combined range of a first range and a second range, in the first range, the hand reaches all of the workpieces arranged on the first pallet and in the second range, the hand reaches only some of the workpieces arranged on the second pallet, which are arranged closer to the first pallet than the workpieces arranged on the first pallet, and
the controller controls the pallet movement portion, such that the second pallet moves toward the first position while the hand holds the workpieces arranged in a position of the second pallet close to the first pallet, and the arm separates from the pallet when all of the workpieces arranged and stored on the first pallet are stored.

2. The work loading and unloading device according to claim 1, wherein the controller controls the movement of the pallet such that the first pallet is unloaded from the first position and the second pallet moves to the first position while the hand holds the workpieces of the second pallet arranged in a position close to the first pallet, and the arm separates from the pallet when all of the workpieces arranged and stored on the first pallet are stored.

3. The work loading and unloading device according to claim 1 or claim 2, wherein the controller moves a new pallet to the second position after the controller moves the second pallet to the first position.

4. The work loading and unloading device according to claim 1 or claim 2, wherein the arm has a length that the hand reaches the combined range of the first range and the second range from a rotation center.

5. A control method of controlling a workpiece loading and unloading device,
wherein the workpiece loading and unloading device comprises a placement portion that comprises two pallets placed thereon, each of the two pallets configured to store a plurality of workpieces arranged thereon, a pallet movement portion that is configured to move the pallet placed in the placement portion, an arm that is configured to move relative to an automatic lathe that machines the workpiece, and a hand that is configured to hold the workpiece and transfer the workpiece between the pallet and the automatic lathe, the placement portion including the two pallets of a first pallet placed in a first position and a second pallet placed in a second position adjacent to the first position, the first pallet and the second pallet being arranged side by side in a plan view,
wherein the method comprises:
controlling the arm to move within a combined range of a first range and a second range, in the first range the hand reaches all of the workpieces arranged on the first pallet and in the second range, the hand reaches only some of the workpieces arranged on the second pallet, which are arranged closer to the first pallet than the workpieces arranged on the first pallet, and
controlling the pallet movement portion, such that the second pallet moves toward the first position while the hand holds the workpieces arranged in a position of the second pallet close to the first pallet, and the arm separates from the pallet when all of the workpieces arranged and stored on the first pallet are stored.

6. The control method of the workpiece loading and unloading device according to claim 5, further comprising;
controlling the pallet movement portion, such that the first pallet is unloaded from the first position and the second pallet is moved to the first position while the hand holds the workpieces of the second pallet arranged in a position close to the first pallet, and the arm separates from the pallet when all of the workpieces arranged and stored on the first pallet are stored.
